# EUROPÄISCHE PATENTANMELDUNG

(11) **EP 1 118 374 A1**
(43) Veröffentlichungstag der Anmeldung: **25.07.2001**
(21) Anmeldenummer: 00890377.5
(22) Anmeldetag: 18.12.2000
(51) Int. Cl.: B01D 53/50

(54) **Verfahren zum Entschwefeln von Abgasen mit calzithältigen silikatischen Flotationsrückständen einer Calzittrennung und Aufarbeitung der Produkte**

(30) Priorität: 18.01.2000 AT 772000
(71) Anmelder: "HOLDERBANK" Financière Glarus AG, 8750 Glarus (CH)
(72) Erfinder: Edlinger, Alfred, 6780 Bartholomäberg (AT)
(74) Vertreter: Haffner, Thomas M., Dr.

(57) **Zusammenfassung**

Bei einem Verfahren zum Entschwefeln von Abgasen mit calzithältigen silikatischen Flotationsrückständen einer Calzitabtrennung wird so vorgegangen, daß die Flotationsrückstände in wässriger Aufschlämmung oder Suspension eingesetzt werden und Abgase durch die Suspension hindurchgeleitet werden, daß die wässrigen, Hydrogensulfite enthaltenden Schlämme gefiltert und entwässert werden, daß die wässrige Phase in der Folge oxidiert wird und das im wesentlichen aus CaSO₄ bestehende Präzipitat abgetrennt wird und daß das im Schlammfilter bzw. der Entwässerung abgetrennte Silikat als Kieselgel weiterverwendet wird. Zum Entschwefeln von Verbrennungsabgasen unter Verwendung von calzithältigen silikatischen Flotationsrückständen einer Calzitabtrennung kann auch so vorgegangen werden, daß die heißen Verbrennungsabgase bei Temperaturen von > 400° durch die calzithältigen silikatischen Flotationsrückstände geleitet werden und das erhaltene Calziumsulfit und Calziumsulfat gemeinsam mit der zu Tridymit thermisch aktivierten Matrix als puzzolanische Mischkomponente in Mischzementen eingesetzt wird.

## Beschreibung

Die Erfindung bezieht sich auf ein Verfahren zum Entschwefeln von Abgasen mit calzithältigen silikatischen Flotationsrückständen einer Calzitabtrennung sowie auf die Aufarbeitung der Produkte. Zur Herstellung von Zement wird üblicherweise Kalk und Bauxit eingesetzt. Eine Reihe von Vorkommen kalkhältiger Mineralien weist aber eine vergleichsweise geringe Reinheit auf, sodaß aufwendige Reinigungsschritte erforderlich sind. Im Zuge derartiger Reinigungen von beispielsweise in Chile in großen Mengen vorrätigem silikatischen Kalkgestein wird zumeist ein Flotationsprozeß eingesetzt, mit welchem eine mit Kalk angereicherte und eine entsprechende kalkverarmte Phase gewonnen wird. Die kalkarme Phase, welche in hohen Mengen anfällt, wird in der Folge verhaldet, und zeichnet sich durch einen relativ hohen Quarz- bzw. SiO₂-Anteil aus. Mit Rücksicht auf diese in hohen Mengen anfallenden Flotationsrückstände, welche als "Rechazo" bezeichnet werden, wurde bereits nach sinnvollen Verwertungen dieses Abfallproduktes gesucht. Unter anderem wurde bereits vorgeschlagen, derartige silikatische Materialien zur Einstellung der Basizität von Schlacken heranzuziehen. Derartige Verfahren erfordern allerdings schmelzflüssige Schlacken, und damit einen relativ hohen Energieeinsatz.

Die Erfindung zielt nun darauf ab, derartige in hohen Mengen anfallende silikatische Materialien, und insbesondere Rechazo, bei vergleichsweise niederen Temperaturen aufzuarbeiten und für den nachfolgenden Einsatz zu veredeln. Zur Lösung dieser Aufgabe, und insbesondere zum Entschwefeln von Abgasen, z.B. aus kalorischen Kraftwerken, Kupfer-Hütten, Zementwerken, der Hochofenschlacken-Granulation oder Kokereien, wird daher erfindungsgemäß vorgeschlagen, daß die Flotationsrückstände in wässriger Aufschlämmung oder Suspension eingesetzt werden und Abgase durch die Suspension hindurchgeleitet werden, daß die wässrigen, Hydrogensulfite enthaltenden Schlämme gefiltert und entwässert werden, daß die wässrige Phase in der Folge oxidiert wird und das im wesentlichen aus CaSO₄ bestehende Präzipitat abgetrennt wird und daß das im Schlammfilter bzw. der Entwässerung abgetrennte Silikat als Kieselgel weiterverwendet wird. Dadurch, daß die Flotationsrückstände unmittelbar in wässriger Aufschlämmung unter Suspension eingesetzt werden, kann eine Verhaldung vermieden werden, und das Produkt unmittelbar aus dem Flotationsverfahren abgezogen werden. Dadurch, daß nun Abgase durch derartige wässrige Aufschlämmungen bzw. Suspensionen hindurchgeleitet werden, wird bei Temperaturen von unter 100° C das verbleibende Kalziumcarbonat in derartigen Flotationsrückständen zu wässrigen Hydrogensulfaten umgesetzt. Bei dieser Umsetzung werden gleichzeitig auch mit Rücksicht auf den pH-Wert derartiger Aufschlämmungen, welche im Bereich von 4,2 bis 4,8 liegen, eine Anzahl löslicher Metallsalze gebildet, wobei neben Calciumhydrogensulfit auch wasserlösliche Magnesium-, Aluminium-und Eisensalze und insbesonder Hydrogensulfite gebildet werden. Wenn in den Abgasen bereits SO₃ vorliegt, kann unmittelbar Calciumsulfat gebildet werden, welches in der festen Phase verbleibt. Dadurch, daß nun im Anschluß die wässrige Suspension gefiltert und entwässert wird, wird unmittelbar ein silikatisches Material gebildet, welches in der Folge nach dem Schlammfilter bzw. der Entwässerung als Kieselgel weiterverwendet werden kann. Bei entsprechend hohen Mengen an Calciumsulfat kann ein derartiges Material auch unmittelbar bei der Beton- und Mörtelherstellung sinnvoll weiterverwendet werden.

Die Hochwertigkeit des gebildeten Silikates resultiert hiebei daraus, daß die Silikatmatrix bei der Umsetzung von in die Matrix eingebeteten Metallsalzen mit SO₂, SO₃ oder H₂S aus den Abgasen aufgebrochen wird, wobei wasserlösliche Salze gebildet werden, und eine entsprechend gereinigte Silikatmatrix verbleibt, welche unmittelbar als Kieselgel anfällt. Dadurch, daß nun die wässrige Phase in der Folge oxidiert wird, kann ein im wesentlichen aus Calziumsulfat bzw. Gips bestehendes Präzipitat abgetrennt werden, welches in der Folge als hochwertiges Material zur Verfügung steht, und gleichfalls in der Zementindustrie eingesetzt werden könnte. Insgesamt wird durch die erfindungsgemäße Erfindung von calzithältigen silikatischen Abfällen, wie sie als Flotationsrückstände in hohen Mengen anfallen, gleichzeitig eine Entschwefelung von Abgasen und eine strukturelle Umwandlung der Silikatmatrix zur "kolloidalen" Kieselsäure erzielt, welche zu hochwertigen weiterverwendbaren Produkten führt.

Mit Vorteil kann in der Folge so vorgegangen werden, daß das Kieselgel nach einer thermischen Aktivierung bei 700° C als künstliches, weitgehend amorphes Puzzolan verwendet wird. Durch entsprechendes Trocknen und Kalzinieren von Kieselgel kann auch Kieselgur gebildet werden, welches als hochwertiges Produkt zur Verfügung steht. Weiters gelingt es, wie es einer bevorzugten Weiterbildung des erfindungsgemäßen Verfahrens entspricht, aus dem Kieselgel in wirtschaftlich einfacher Weise durch Neutralisieren, beispielsweise mit Natronlauge, Wasserglas herzustellen, womit ein hochwertiger Aktivator zur Verfügung gestellt werden kann. Der erhaltene Gips kann beispielsweise nach dem Kühne-Müller-Verfahren zu Zementklinker und Schwefelsäure weiterverarbeitet werden. Gemäß einer bevorzugten Weiterbildung des erfindungsgemäßen Verfahrens, kann aber das Kieselgel als Verschlackungsmittel in der Kupfer-Verhüttung eingesetzt werden. Weitere Einsatzmöglichkeit für die gebildete Silikatmatrix stellen naturgemäß die Glasindustrie oder Verfahren dar, in welchen die Silikatmatrix als Verfüllmaterial, als Katalysator, als Katalysator-Träger bei organischen Synthesen, als Molekularsieb oder zur Wasseraufbereitung eingesetzt werden kann.

Mit Vorteil kann im Rahmen des erfindungsgemäßen Verfahrens so vorgegangen werden, daß das erhaltene Silicagel bzw. die Aufschlämmung über Zerstäuber sprühgetrocknet wird. Bei einem derartigen Sprühtrocknen mit üblichen Zerstäubern und insbesondere unter Verwendung von Heißdampf oder Heißgas werden sehr feine Pulver mit Partikelgröße zwischen 5 µ und 35 µ erhalten, sodaß ein Mahlen nicht erforderlich ist.

Alternativ zu dieser Umsetzung der calzithältigen silikatischen Flotationsrückstände bei vergleichsweise niederer Temperatur und unter Einsatz von Naßverfahren, kann aber im Rahmen des erfindungsgemäßen Verfahrens auch so vorgegangen werden, daß die heißen Verbrennungsabgase bei Temperaturen von > 400° durch die calzithältigen silikatischen Flotationsrückstände geleitet werden und das erhaltene Calziumsulfit und Calziumsulfat gemeinsam mit der zu Tridymit thermisch aktivierten Matrix als puzzolanische Mischkomponente in Mischzementen eingesetzt wird. Bei Temperaturen von über 400° C verbleibt das gebildete Sulfit bzw. Sulfat in der Matrix, wobei die Matrix selbst thermisch zu Tridymit aktiviert wird, wodurch eine puzzolanische hochaktive Quarzmodifikation geschaffen wird. Derartiges Tridymit-Puzzolan kann in der Folge bis zu 40 Gew.% in Mischzementen beigegeben werden.

Die Erfindung wird nachfolgend an Hand eines Ausführungsbeispieles näher erläutert. Als Entschwefelungsmittel wurde Rechazo mit folgender Zusammensetzung eingesetzt:

| Rechazo | |
|---|---|
| Komponente | % |
| CaCO₃ | 35 |
| SiO₂ | 49 |
| Al₂O₃ | 3,5 |
| Fe₂O₃ | 2 |
| MgCO₃ | 2 |
| Na₂O | 0,1 |
| K₂O | 0,4 |
| SO₃ | 0,04 |
| Rest | 7,5 |

Der in dieser Zusammensetzung angegebene Rest setzt sich aus CO₂ und Restfeuchte zusammen. Rechazo wurde pumpfähig eingesetzt und auf einen Wassergehalt von 75 bis 85Gew.% gebracht und in eine Rauchgasentschwefelungskolonne eingebracht.

Durch diese Rauchgasentschwefelungskolonne wurde in der Folge Rauchgas hindurchgeleitet, wobei Calzium-, Magnesium-, Aluminium-, Alkalien- und Eisenionen als Kationen in Lösung gingen und die Lösung primär SO₂, SO₃, HSO₃-Anionen und andere lösliche Salze enthielt. Die Suspension wies mit SO₂ beladen, d.h. nach der Entschwefelung, einen pH-Wert im Bereich zwischen 4,2 und 4,8 auf. Geringe Mengen an gegebenenfalls bereits gebildetem Calziumsulfat verbleiben bei der Silikatmatrix. Nach dem Entwässern der in die Rauchgasentschwefelungskolonne aufgebrachten Aufschlämme in einem Filter und insbesondere in einer Filterpresse wurde das silikatische Material abgetragen und unmittelbar ein hochreines Silikagel erhalten. Die wässrige Lösung wurde in der Folge oxidiert, wodurch zunächst Calziumsulfat gefällt werden konnte und in der Folge in einer weiteren Flüssigfesttrennung, wie beispielsweise einem Filter, abgetrennt werden konnte. Die verbleibende wässrige Phase enthält eine Reihe weiterer Kationen, welche fraktioniert gefällt werden können, wobei in der Folge in erster Linie Alkalien in Lösung bleiben und in der Folge ausgeschleust werden müssen, worauf das gereinigte Wasser zur Herstellung der Aufschlämmung wiederum rückgeführt wird.

Das in der ersten Entwässerung abgetrennte Silikat enthält zumindest teilamorphes SiO₂ mit geringen Verunreinigungen, welches bereits nach einem Trocknungsprozeß bei etwa 150° C gute puzzolanische Eigenschaften aufweist, die durch Einsatz höherer Temperaturen und Aktivierung der Matrix zu Tridymit entsprechend verbessert werden können. Die Aktivierung der Silikatmatrix setzt hiebei bei Temperaturen über 400° C ein, und kann bevorzugt bei Temperaturen von etwa 900° C vorgenommen werden.

Optimale Temperaturen für eine thermische Aktivierung der Silikatmatrix liegen zwischen 800 und 1100° C, wodurch unmittelbar hochwertiges künstliches Puzzolan erzielt wird.

## Patentansprüche

1. Verfahren zum Entschwefeln von Abgasen mit calzithältigen silikatischen Flotationsrückständen einer Calzitabtrennung und Aufarbeitung der Produkte, dadurch gekennzeichnet, daß die Flotationsrückstände in wässriger Aufschlämmung oder Suspension eingesetzt werden und Abgase durch die Suspension hindurchgeleitet werden, daß die wässrigen, Hydrogensulfite enthaltenden Schlämme gefiltert und entwässert werden, daß die wässrige Phase in der Folge oxidiert wird und das im wesentlichen aus CaSO₄ bestehende Präzipitat abgetrennt wird und daß das im Schlammfilter bzw. der Entwässerung abgetrennte Silikat als Kieselgel weiterverwendet wird.

2. Verfahren nach Anspruch 1, dadurch gekennzeichnet, daß das Kieselgel bei 800° bis 1000° C thermisch aktiviert wird.

3. Verfahren nach Anspruch 1 oder 2, dadurch gekennzeichnet, daß das erhaltene Silicagel bzw. die Aufschlämmung über Zerstäuber sprühgetrocknet wird.

4. Verfahren zum Entschwefeln von Verbrennungsabgasen unter Verwendung von calzithältigen silikatischen Flotationsrückständen einer Calzitabtrennung, dadurch gekennzeichnet, daß die heißen Verbrennungsabgase bei Temperaturen von > 400° durch die calzithältigen silikatischen Flotationsrückstände geleitet werden und das erhaltene Calziumsulfit und Calziumsulfat gemeinsam mit der zu Tridymit thermisch aktivierten Matrix als puzzolanische Mischkomponente in Mischzementen eingesetzt wird.

5. Verwendung von nach Anspruch 1 erhaltenem Kieselgel als Verschlackungsmittel in der Kupfer-Verhüttung.

6. Verwendung von nach Anspruch 2 aktiviertem Kieselgel als künstliches Puzzolan.

7. Verwendung von nach Anspruch 1 oder 2 erhaltenem Kieselgel zur Herstellung von Wasserglas.
